# EUROPÄISCHE PATENTANMELDUNG

(11) **EP 4 170 256 A1**
(43) Veröffentlichungstag der Anmeldung: **26.04.2023**
(21) Anmeldenummer: 22202384.8
(22) Anmeldetag: 19.10.2022
(51) Int. Cl.: F24H 9/06, F16M 3/00, F16M 5/00

(54) **VERFAHREN UND ANORDNUNG ZUR MONTAGE EINER WÄRMEPUMPE**

(30) Priorität: 22.10.2021 DE 102021127447
(71) Anmelder: Vaillant GmbH, 42859 Remscheid NRW (DE)
(72) Erfinder: Sommer, Holger, 44388 Dortmund (DE); Noll, Wolfgang, 42115 Wuppertal (DE); Hein, Tobias, 44894 Bochum (DE)
(74) Vertreter: Popp, Carsten

(57) **Zusammenfassung**

Es wird ein Verfahren zur Montage einer Wärmepumpe (1) auf einem Untergrund (7) umfassend zumindest die folgenden Schritte vorgestellt:
a) Anordnen eines unteren Befestigungsteils (2) auf dem Untergrund (7),
b) Befüllen einer Kavität des unteren Befestigungsteils (4, 2) mit einem Beschwerungsmittel (3),
c) Anordnen eines oberen Befestigungsteils (4) auf dem unteren Befestigungsteil (2),
d) Befestigen der Wärmepumpe (1) am oberen und/ oder unteren Befestigungsteil (4,2).

Die Erfindung dient insbesondere einer einfachen und schnellen Montage einer Wärmepumpe (1), insbesondere eines Außenteils einer Luftwärmepumpe. Ein Außenteil einer Luftwärmepumpe weist in der Regel eine großflächige Durchströmungsöffnung auf, wodurch ein Außenteil zumeist eine große Breiten- und Höhenausdehnung bei geringer Tiefe aufweist. Aufgrund dieser Abmessungen können erhebliche Windlasten, insbesondere in Durchströmungsrichtung des Außenteils, auftreten die bei einer Montage (des Außenteils) der Wärmepumpe (1) zu berücksichtigen sind.

## Beschreibung

Die Erfindung betrifft ein Verfahren und eine Anordnung zur Montage einer Wärmepumpe.

Für die Wärme- und Warmwasserversorgung von Gebäuden werden Wärmepumpen immer wichtiger. Diese entziehen der Umgebung (Luft, Boden, Grundwasser) Wärme und stellen diese zur Versorgung des Gebäudes bereit. Es kommen häufig Split-Wärmepumpen zum Einsatz, die einen Außenteil und einen Innenteil umfassen.

Insbesondere bei Wärmepumpen, die der Umgebungsluft Wärme entziehen, ist ein Außenteil in der Regel sehr groß und voluminös ausgeführt, um einen geräuscharmen und energieeffizienten Wärmeaustausch zu ermöglichen. Um die notwendige Grundfläche für die Installation eines Außenteils zu minimieren, werden diese zudem häufig sehr hoch ausgeführt. Diese Ausgestaltung der Wärmepumpen führt zu erheblichen Anforderungen an die Bodenverankerung der Wärmepumpe, insbesondere im Hinblick auf auftretende Windlasten in Verbindung mit der durch die Gerätehöhe bedingte Hebelwirkung.

Nach dem Stand der Technik kommen zumeist klassische Verfahren zum Einsatz, die die Errichtung eines herkömmlichen Fundaments, beispielsweise eines Betonstreifenfundaments erfordern. Hierbei sind eine Vielzahl aufwendiger Arbeitsschritte wie Erdarbeiten, Installation einer Betonschalung, Ortbetonvergießung etc. notwendig, verbunden mit erheblichem Zeit- und Kostenaufwand.

Hierzu wird in der JP 2009 008 320 A vorgeschlagen, mehrere Tragpfosten in den Boden einzubringen, um darauf eine Wärmepumpe zu installieren. Nachteilig ist insbesondere das Einbringen der Pfosten aufwendig.

Die AU 2006/324372A1 hat eine Bodenplatte für eine Außeneinheit beispielsweise einer Klimaanlage zum Gegenstand, die aus einem leichten Material besteht, eine geschlossene Oberfläche aufweist und unten Wände aufweist, die dazu eingerichtet sind in den Boden einzudringen, um Stabilität zu geben. Diese Bodenplatte kann jedoch nur bei besonders vorbereiteten oder geeigneten Untergründen eingesetzt werden, wobei beispielsweise ein Einsatz auf einem Flachdach ausgeschlossen ist.

Auch bei einer Montage einer Wärmepumpe, bzw. eines Anlagenteils, auf einem befestigten Untergrund, beispielsweise auf einem Flachdach, müssen nach dem Stand der Technik Zusatzgewichte zur Absicherung gegen Windlasten aufwendig an den Aufstellort verbracht und positioniert werden. Regelmäßig sind für die Montage einer Wärmepumpe auf einem befestigten Untergrund Gewichte zwischen 200 kg und 400 kg notwendig. Das Verbringen der Gewichte und deren Positionieren ist nachteilig kompliziert und zeitaufwendig.

Hiervon ausgehend ist es Aufgabe der Erfindung, ein Verfahren und eine Anordnung zur Montage einer Wärmepumpe vorzuschlagen, der die geschilderten Probleme des Standes der Technik zumindest teilweise überwindet. Insbesondere sollen Verfahren und Anordnung eine besonders einfache, schnell durchzuführende und kostengünstige Möglichkeit zur Montage einer Wärmepumpe angeben.

Insbesondere sollen das Verfahren und die Anordnung dazu beitragen eine Wärmepumpe stabil gegenüber auftretenden Windlasten zu montieren.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Montage einer Wärmepumpe auf einem Untergrund, umfassend zumindest die folgenden Schritte:
a) Anordnen eines unteren Befestigungsteils auf dem Untergrund,
b) Befüllen einer Kavität des unteren Befestigungsteils mit einem Beschwerungsmittel,
c) Anordnen eines oberen Befestigungsteils auf dem unteren Befestigungsteil,
d) Befestigen der Wärmepumpe an dem oberen Befestigungsteil und/oder an dem unteren Befestigungsteil.

Die Schritte a), b), c) und d) werden bei einem regulären Verfahrensablauf mindestens einmal in der angegebenen Reihenfolge durchgeführt. Dabei ist es auch möglich, den Schritt d) vor dem Schritt c) durchzuführen. Gleichfalls möglich ist eine Durchführung des Schrittes b) nach Durchführung des Schrittes c).

Die Erfindung dient insbesondere einer einfachen und schnellen Montage einer Wärmepumpe, insbesondere eines Außenteils einer Luftwärmepumpe. Wenn im Folgenden vom Begriff "Wärmepumpe" die Rede ist, ist insbesondere immer das Außenteil einer Wärmepumpe gemeint, welches außen angeordnet ist und auftretenden Windlasten ausgesetzt ist. Ein Außenteil einer Luftwärmepumpe weist in der Regel eine großflächige Durchströmungsöffnung auf, wodurch eine Außenteil zumeist eine große Breiten- und Höhenausdehnung bei geringer Tiefe aufweist. Aufgrund dieser Abmessungen können erhebliche Windlasten, insbesondere in Durchströmungsrichtung des Außenteils, auftreten die bei einer Montage (des Außenteils) der Wärmepumpe zu berücksichtigen sind.

Die Wärmepumpe kann eine beliebige Wärmepumpe oder ein Anlagenteil, insbesondere ein Außenteil, hiervon sein. Eine Wärmepumpe kann Umgebungswärme, beispielsweise aus Luft, Erde oder Grundwasser aufnehmen und zur Wärmeversorgung bzw. Warmwasserbereitstellung eines Gebäudes bereitstellen. Hierfür können ein Außenteil und ein Innenteil einer Wärmepumpe über einen Kältemittelkreis verbunden sein, wobei ein Kältemittel im Kältemittelkreis umgewälzt werden kann, das durch Phasenwechsel in einem Verdampfer bzw. Kondensator (Verflüssiger) Wärme transportiert.

Gemäß einem Schritt a) erfolgt ein Anordnen eines unteren Befestigungsteils auf dem Untergrund. Die Durchführung des Schrittes a) sollte dabei im Hinblick auf den konkreten Untergrund, beispielsweise Erdboden oder befestigter Boden, erfolgen. Bei einer Montage der Wärmepumpe auf dem Erdboden als Untergrund kann es sinnvoll erscheinen, dass untere Befestigungsteil in den Boden einzubringen. Zudem kann durch Einbringung eines Kiesbettes oder dergleichen eine Drainage geschaffen werden, die die Standfestigkeit weiter verbessern kann. Vorteilhaft sind im Vergleich zur Herstellung eines klassischen Fundaments nur geringe und oberflächennahe Erdarbeiten notwendig.

Bei der Montage einer Wärmepumpe auf einem befestigten Untergrund, beispielsweise einem Flachdach, kann das anordnen des unteren Befestigungsteils gemäß Schritt a) in einem Auflegen desselben auf dem (festen) Untergrund bestehen.

Gemäß einer vorteilhaften Ausgestaltung kann die Durchführung des Schrittes a), insbesondere bei einer Montage auf einem befestigten Untergrund, ein Anordnen von Kippstützen mit umfassend. Die Kippstützen können dabei beispielsweise Träger sein, die das untere Befestigungsteil bzw. eine darauf befestigte Wärmepumpe in Durchströmungsrichtung (insbesondere die Richtung in der Luft durch die Wärmepumpe strömt) abstützen und die wesentliche Windangriffsfläche und dort angreifende Windlasten aufnehmen. Solche Kippstützen sind insbesondere mit dem unteren Befestigungsteil derart verbunden, dass ein längerer Hebelarm zum Ableiten auftretender (insbesondere durch Windlasten verursachte) Kippmomente mit dem unteren Befestigungsteil bereitgestellt wird. Kippstützen sind besonders bevorzugt mit Befestigungspunkten (insbesondere mit Verschraubungspunkten) ausgeführt, an welchen die Kippstützen mit einem Untergrund verschraubt werden können. Eine Verbindung mit einem Untergrund erfolgt (bspw. durch eine Verschraubung) in einer Art- und Weise, die die Übertragung von Zugkräften von dem Untergrund auf die Kippstützen ermöglicht. So kann die Möglichkeit der Ableitung auftretender Kippmomente weiter verbessert werden.

Gemäß einem Schritt b) erfolgt ein Befüllen einer Kavität des unteren Befestigungsteils mit einem Beschwerungsmittel. Das Beschwerungsmittel kann dabei insbesondere ein Schüttgut wie Sand oder Kies oder ein Fluid, beispielsweise Wasser sein.

Ein solches Beschwerungsmittel hat den Vorteil, dass es bereits aus sich selbst heraus eine dämpfende Wirkung aufweist. Schallschwingungen werden beispielsweise durch Sand sehr viel schwächer übertragen als durch einen massiven Betonkörper.

Gemäß einer vorteilhaften Ausgestaltung kann im Rahmen der Durchführung des Schrittes b) in die Kavität des unteren Befestigungsteils vor dem Befüllen ein Auslaufschutz eingebracht werden. Beispielsweise für den Einsatz von Sand als Beschwerungsmittel könnte eine textile Lage, beispielsweise ein Vlies, ein Austreten von Sand bei einer Beschädigung des unteren Befestigungsteils verhindern bzw. zumindest hinauszögern.

Gemäß einem Schritt c) erfolgt ein Anordnen eines oberen Befestigungsteils auf dem unteren Befestigungsteil. Das Anordnen kann erfolgen, in dem die in Schritt b) gefüllte Kavität vollständig abgedeckt und/oder verschlossen wird. In vorteilhafter Weise kann so ein Austreten des Beschwerungsmittels aufgrund von Witterungseinflüssen verhindert werden.

Gemäß einer vorteilhaften Ausgestaltung kann im Rahmen der Durchführung des Schrittes c) eine Verbindung des unteren Befestigungsteils und des oberen Befestigungsteils erfolgen und insbesondere eine fluiddichte Dichtung eingebracht werden, wodurch die Kavität abgedichtet ist und ein Austreten eines fluiden Beschwerungsmittels, wie beispielsweise Wasser, verhindert werden kann. Die fluiddichte Dichtung kann dabei auch in einem befüllbaren (elastischen) Element in der Kavität bestehen.

Die Verbindung des unteren Befestigungsteils und des oberen Befestigungsteils erfolgt bevorzugt so, dass auch Zugkräfte von dem oberen Befestigungsteils auf das untere Befestigungsteil übertragen werden können. Die Verbindung umfasst dafür beispielsweise Verschraubungen zwischen dem unteren Befestigungsteil und dem oberen Befestigungsteil. Nach dem Anordnen des oberen Befestigungsteils auf dem unteren Befestigungsteils sowie nach dem Verbinden bilden das untere Befestigungsteil und das obere Befestigungsteil bevorzugt eine Einheit umfassend das Beschwerungsmittel. Die Tatsache, dass sich zwischen dem oberen Befestigungsteil und dem unteren Befestigungsteil das Beschwerungsmittel befindet, ist von außen nicht mehr erkennbar. Es ist eine Gesamtbefestigungsteil gebildet, dessen Eigenschaften im Wesentlichen einem massiven Körper (bspw. einer Betonplatte) entsprechen.

Gemäß einer vorteilhaften Ausgestaltung kann das Anordnen des oberen Befestigungsteils auf dem unteren Befestigungsteil gemäß Schritt c) derart erfolgen, dass im Ergebnis der untere Befestigungsteil vom oberen Befestigungsteil zumindest teilweise umschlossen wird oder umgekehrt. Hierzu können die Abmessungen des oberen Befestigungsteils gegenüber dem unteren Befestigungsteil entsprechend größer gewählt werden, sodass ein möglichst spielfreies Aufsetzen (und Umschließen) ermöglicht wird. Mit anderen Worten kann das obere Befestigungsteil einen umfänglichen Rand aufweisen, der sich (bevorzugt vollständig) um einen umfänglichen Rand des unteren Befestigungsteils herum erstreckt, wenn das obere Befestigungsteil auf das untere Befestigungsteil aufgesetzt wird. Ein solches Zusammenwirken von oberem Befestigungsteil und unterem Befestigungsteil funktioniert ähnlich wie das Zusammenwirken von Basis und Deckel bei einem Schuhkarton. Ein solches Zusammenwirken von unterem Befestigungsteil und oberem Befestigungsteil bewirkt, dass das obere Befestigungsteil sich problemlos gerade von oben in senkrechter Richtung auf das untere Befestigungsteil aufsetzen lässt. Zudem bringt in vorteilhafter Weise eine derartige Durchführung des Schrittes c) eine besonders sichere Verbindung von oberem Befestigungsteil und unterem Befestigungsteil hervor, die durch Verkanten auch Windlasten standhalten kann. Durch Windlasten verursachte Kippmomente wirken nämlich nicht senkrecht, sondern sie bewirken ein Verkeilen bzw. Verkanten des oberen Befestigungsteils auf dem unteren Befestigungsteil. Auf der dem Wind zugewandte Seite wird das obere Befestigungsteil angehoben auf der dem Wind abgewandten Seite wird es heruntergedrückt. Dies bewirkt das Verkanten bzw. Verkeilen.

Gemäß einer weiteren vorteilhaften Ausgestaltung kann das Anordnen des oberen Befestigungsteils auf dem unteren Befestigungsteil auch ein Verbinden von oberem und unteren Befestigungsteil umfassen. Dies kann eine form- oder stoffschlüssige Verbindung sein, beispielsweise verschrauben oder verkleben.

Gemäß einem Schritt d) kann ein Befestigen der Wärmepumpe, oder eines Anlagenteils derselben, an dem oberen Befestigungsteil erfolgen. Das Befestigen kann mit bekannten Maßnahmen, insbesondere mittels einer Schraubverbindung erfolgen.

Gemäß einer vorteilhaften Ausgestaltung erfolgt ein Befestigen der Wärmepumpe gemäß Schritt c) mittels bereits im oberen Befestigungsteil und/ oder unteren Befestigungsteil vorinstallierten und entsprechend korrespondierenden Befestigungspunkten der an der Wärmepumpe angeordneten Befestigungsmitteln. Vorteilhaft wird so auch ermöglicht, eine Verbindung von Befestigungsteil, oberem und unteren Befestigungsteil und die Befestigung der Wärmepumpe mit der gleichen Befestigungsanordnung zu erreichen.

Gemäß einer weiteren vorteilhaften Ausgestaltung kann im Rahmen des Befestigens der Wärmepumpe in Schritt c) zwischen Wärmepumpe und oberem Befestigungsteil mindestens ein Vibrationsdämpfer eingebracht werden. Als Vibrationsdämpfer können beispielsweise Gummielemente, Vibrationsdämpfer umfassend Federn oder Drahtgewebe, EPDM-Gummidämpfer, hydraulische Federn oder Luft-Federn oder auch Kombinationen aus den genannten eingesetzt werden. Solche Vibrationsdämpfer können bspw. an dem oberen Befestigungsteil verschraubt werden.

Nach einem weiteren Aspekt wird eine Anordnung zur Montage einer Wärmepumpe oder eines Anlagenteils derselben auf einem Untergrund vorgeschlagen, umfassend ein unteres Befestigungsteil und ein oberes Befestigungsteil, wobei das untere Befestigungsteil eine Kavität zur Aufnahme eines Beschwerungsmittels aufweist.

Gemäß einer vorteilhaften Ausgestaltung kann zumindest das untere Befestigungsteil so beschaffen sein, dass eine hohe bzw. erhöhte Haftreibung mit dem Untergrund gewährleistet bzw. vorgesehen ist. Hierzu kann, insbesondere der dem Untergrund zugewandte Teil des unteren Befestigungsteils eine erhöhte Oberflächenrauheit und/oder eine strukturierte Oberfläche aufweisen.

Gemäß einer vorteilhaften Ausgestaltung kann die Anordnung mindestens einen Vibrationsdämpfer umfassen, der zur Anordnung zwischen Wärmepumpe und dem oberen Befestigungsteil und/ oder dem unteren Befestigungsteil eingerichtet ist. Die Vibrationsdämpfer können Vibrationen der Wärmepumpe, beispielsweise erzeugt durch einen Kompressor als Verdichter des Kältemittelkreises, aufnehmen und eine Übertragung auf oberes und/ oder unteres Befestigungsteil verhindern oder mindern.

Gemäß einer weiteren vorteilhaften Ausgestaltung können obere und/ oder unteres Befestigungsteil einen Kondensatablauf aufweisen. Der Kondensatablauf kann in der Wärmepumpe (häufig am Wärmetauscher) entstehendes und an definierter Position aus der Wärmepumpe austretendes Kondensat abführen. Hierzu kann in dem oberen Befestigungsteil und/oder in dem unteren Befestigungsteil ein Kanal vorgesehen sein, der das Kondensat durch die mit Beschwerungsmittel gefüllte Kavität leitet. Ein Versickern des Kondensats unterhalb des unteren Befestigungsteils kann durch ein Kiesbett begünstigt werden. Alternativ oder kumulativ kann ein Kanal bzw. eine Rinne für ein Ableiten des Kondensats auf der Oberfläche des oberen Befestigungsteils vorgesehen sein.

Gemäß einer weiteren vorteilhaften Ausgestaltung kann die Anordnung weitere Einrichtungen umfassen, beispielsweise einen Wandanschluss, einen Bodenanschluss, eine Kondensatheizung, Antivibrationsfüße und/oder einen Schneesockel. Ein Wand- oder Bodenanschluss kann beispielsweise aus expandiertem Polypropylen (EPP) bestehen.

Gemäß einer weiteren vorteilhaften Ausgestaltung kann das obere und/ oder untere Befestigungsteil aus Beton, einem Metall und/ oder einem (faserverstärktem) Kunststoff bestehen. Vorteilhaft kann Beton aufgrund des hohen Eigengewichtes die Stabilität der zu montierenden Wärmpumpe steigern. Bedarfsweise kann ein aus Beton gefertigtes unteres oder oberes Befestigungsteil eine Bewährung, beispielsweise mit Stahl oder einem Textil, aufweisen, die die Stabilität der Befestigungsteile weiter erhöht. Als metallischer Werkstoff kann insbesondere Stahl eingesetzt werden, vorteilhaft Edelstahl oder in verzinkter Ausführung.

Die im Zusammenhang mit dem Verfahren erörterten Details, Merkmale und vorteilhaften Ausgestaltungen können entsprechend auch bei der hier vorgestellten Anordnung auftreten und umgekehrt. Insoweit wird auf die dortigen Ausführungen zur näheren Charakterisierung der Merkmale vollumfänglich Bezug genommen.

Hier werden somit ein Verfahren und eine Anordnung angegeben, welche die mit Bezug auf den Stand der Technik geschilderten Probleme zumindest teilweise lösen. Insbesondere tragen Verfahren und Anordnung zumindest dazu bei, eine einfache und schnelle Montage einer Wärmepumpe oder eines Anlagenteils derselben zu gewährleisten.

Zudem ermöglicht die Erfindung auf bestimmte Anlagengrößen und deren abzusichernde Windlasten abgestimmte Kits von oberen und unteren Befestigungsteilen anzubieten. Diese können zudem vorpositionierte Befestigungsmittel für die Wärmepumpe sowie gegebenenfalls einen vorpositionierten Kondensatablauf aufweisen.

In vorteilhafter Weise ist ein Verbringen des Beschwerungsmittels einfach möglich, da es in beliebigen Teilmengen transportiert werden kann und häufig auf Baustellen verfügbar ist. Ein weiterer Vorteil kann in der Einsatzmöglichkeit von Verfahren und Anordnung auf beliebigen Untergründen, insbesondere Erdboden oder befestigten Untergründen erkannt werden.

Zudem ermöglicht die Erfindung ein Anbieten von vorgefertigten Befestigungssystemen bestehend aus einem oberen und unterem Befestigungsteil und gegebenenfalls Zusatzausrüstungen wie Vibrationsdämpfern abgestimmt auf die Windlasten bestimmter Typen (Größen) von Wärmepumpen.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Figur 1:: einen Ablauf eines hier vorgestellten Verfahrens,
- Figur 2:: eine hier vorgeschlagene Anordnung, und
- Figur 3:: eine mittels eines hier vorgeschlagenen Verfahrens montierte Wärmepumpe.

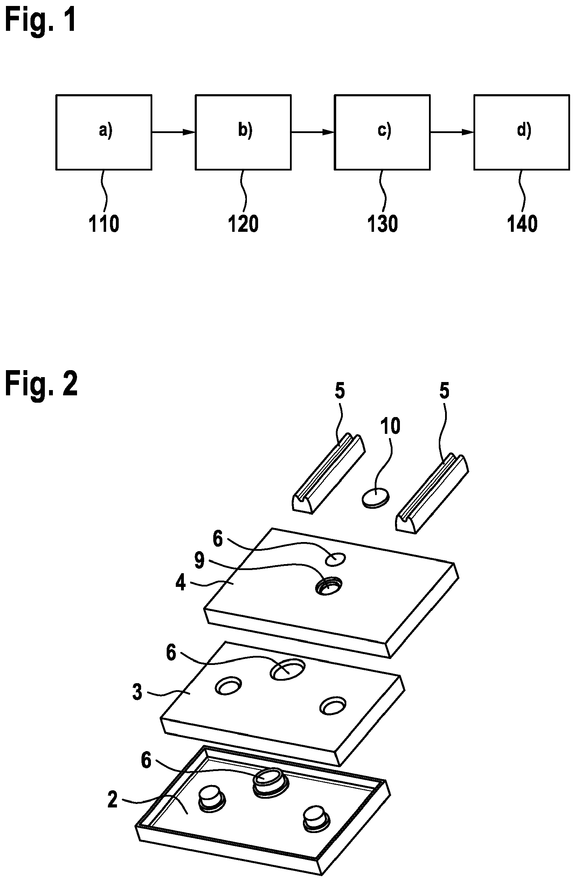

Figur 1 zeigt beispielhaft und schematisch einen Ablauf eines hier vorgeschlagenen Verfahrens. Das Verfahren dient zur Montage einer Wärmepumpe 1 oder eines Anlagenteils einer Wärmepumpe auf einem Untergrund 7. Die mit den Blöcken 110, 120, 130 und 140 dargestellte Reihenfolge der Schritte a), b), c) und d) kann sich bei einem regulären Verfahrensablauf einstellen.

In Block 110 kann gemäß Schritt a) ein Anordnen eines unteren Befestigungsteils 2 auf dem Untergrund 7 erfolgen. Das untere Befestigungsteil 2 kann beispielsweise aus Beton gefertigt sein und ein Gewicht von 88 kg [Kilogramm] aufweisen.

In Block 120 kann gemäß Schritt b) ein Befüllen einer Kavität des unteren Befestigungsteils 2 mit einem Beschwerungsmittel 3, beispielsweise Sand, erfolgen. Die Kavität des unteren Befestigungsteils 2 kann beispielsweise Sand als Beschwerungsmittel 3 mit einem Gewicht von 177 kg aufnehmen.

In Block 130 kann gemäß Schritt c) ein Anordnen eines oberen Befestigungsteils 4 auf dem unteren Befestigungsteil 2 erfolgen. Dabei kann das obere Befestigungsteil 4 das untere Befestigungsteil zumindest teilweise umschließen, wie in Figur 2 ersichtlich. Das obere Befestigungsteil 4 kann beispielsweise ein Gewicht von 86 Kg aufweisen.

Die Gesamtheit von oberem Befestigungsteil 4, unterem Befestigungsteil 2 und dem Beschwerungsmittel 3 (Sand) im Beispiel hat somit ein Gewicht von ca. 352 kg, ausreichend für Windlasten gängiger Außenteile von Wärmepumpen 1.

In Block 140 kann gemäß Schritt d) ein Befestigen der Wärmepumpe 1 am oberen und/ oder unteren Befestigungsteil 2, 4 erfolgen.

Gemäß einer alternativen Ausgestaltung des Verfahrens kann ein Befüllen mit Beschwerungsmittel 3 gemäß Block 120 (Schritt b)) auch erst nach Durchführung von Block 130 (Schritt c)) erfolgen, beispielsweise durch eine Öffnung 9 des oberen Befestigungsteils 4, welche mit einem Deckel 10 verschließbar ist.

Gemäß einer weiteren alternativen Ausgestaltung des Verfahrens kann ein Befestigen der Wärmepumpe 1 am oberen und/ oder unteren Befestigungsteil 2,4 gemäß Block 140 (Schritt d)) vor dem Anordnen des oberen Befestigungsteils 4 auf dem unteren Befestigungsteil 2 erfolgen. Dann wäre in Block 130 (Schritt c)) das obere Befestigungsteil 4 mitsamt der Wärmepumpe 1 auf dem unteren Befestigungsteil 2 anzuordnen.

Figur 2 zeigt beispielhaft und schematisch eine hier vorgeschlagene Anordnung. Diese kann ein untere Befestigungsteil 2 und ein oberes Befestigungsteil 4 umfassen. In eine Kavität des unteren Befestigungsteils 2 kann ein Beschwerungsmittel 3 eingebracht werden, beispielsweise Sand. Ein Befestigen der Wärmepumpe 1 am unteren und/ oder oberen Befestigungsteil 2,4 kann mit zwischen oberem Befestigungsteil 4 und Wärmepumpe 1 angeordneten Vibrationsdämpfern 5 erfolgen. Oberes und/ oder unteres Befestigungsteil 4,2 können zudem einen Kondensatablauf 6 aufweisen, der auf die konkrete Wärmepumpe 1 und deren Ablaufposition angestimmt sein kann. Der Kondensatablauf 6 kann vorteilhaft derart gestaltet sein, dass anfallendes Kondensat durch oberes und untere Befestigungsteil 2,4 geführt werden kann und insbesondere nicht in die Kavität von oberem und/oder unterem Befestigungsteil gelangen kann.

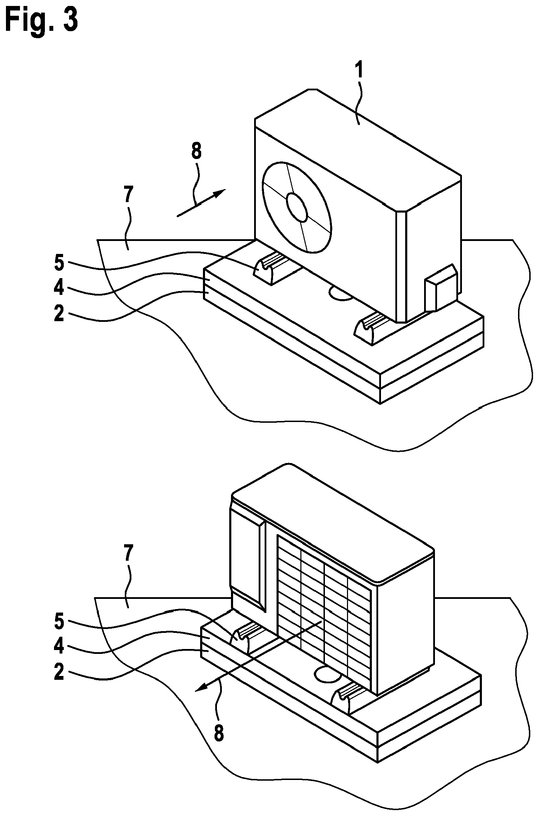

Figur 3 zeigt eine Wärmepumpe 1, die mit einem hier vorgestellten Verfahren und einer hier vorgestellten Anordnung montiert wurde. Die Wärmepumpe 1 ist auf einem unteren Befestigungsteil 2, einem darauf angeordneten oberen Befestigungsteil 4 und Vibrationsdämpfern 5 angeordnet. Die Wärmepumpe 1, hier ausgeführt als ein Außenteil einer Luftwärmepumpe kann in einer Durchströmungsrichtung 8 von Umgebungsluft zur Aufnahme von Wärme aus derselben durchströmt werden.

Die Wärmepumpe 1 ist mittels des hier vorgestellten Verfahrens gegenüber auftretenden Windlasten ausreichend stabil fixiert.

### Bezugszeichenliste

- 1: Wärmepumpe
- 2: unteres Befestigungsteil
- 3: Beschwerungsmittel
- 4: oberes Befestigungsteil
- 5: Vibrationsdämpfer
- 6: Kondensatablauf
- 7: Untergrund
- 8: Durchströmungsrichtung
- 9: Öffnung
- 10: Deckel

## Patentansprüche

1. Verfahren zur Montage einer Wärmepumpe (1) auf einem Untergrund (7) umfassend zumindest die folgenden Schritte:
a) Anordnen eines unteren Befestigungsteils (2) auf dem Untergrund (7),
b) Befüllen einer Kavität des unteren Befestigungsteils (2) mit einem Beschwerungsmittel (3),
c) Anordnen eines oberen Befestigungsteils (4) auf dem unteren Befestigungsteil (2),
d) Befestigen der Wärmepumpe (1) am oberen und/ oder unteren Befestigungsteil (4,2).

2. Verfahren nach Anspruch 1, wobei das Anordnen des unteren Befestigungsteils (2) in Schritt a) ein Einbringen des unteren Befestigungsteils (2) in den Erdboden umfasst.

3. Verfahren nach Anspruch 1, wobei das Anordnen des unteren Befestigungsteils (2) ein Anordnen von Kippstützen umfasst.

4. Verfahren nach einem der vorangehenden Ansprüche, wobei in Schritt b) die Kavität des oberen und/ oder unteren Befestigungsteils (4, 2) mit Sand als Beschwerungsmittel (3) befüllt wird.

5. Verfahren nach einem der vorangehenden Ansprüche, wobei in Schritt c) das obere Befestigungsteil (4) und das untere Befestigungsteil (2) miteinander verbunden werden.

6. Verfahren nach einem der vorangehenden Ansprüche, wobei in Schritt d) das Befestigen der Wärmepumpe (1) an am oberen und/ oder unteren Befestigungsteil (4, 2) vorinstallierten Befestigungselementen erfolgt.

7. Anordnung zur Montage einer Wärmepumpe (1) auf einem Untergrund (7) umfassend ein unteres Befestigungsteil (2) und ein oberes Befestigungsteil (4), wobei das untere Befestigungsteil (2) und/ oder obere Befestigungsteil (4) eine Kavität zur Aufnahme eines Beschwerungsmittels (3) aufweist.

8. Anordnung nach Anspruch 7, wobei an dem oberen Befestigungsteil (2) Vibrationsdämpfer (5) angeordnet sind, an denen vorinstallierten Befestigungselemente zur Installation einer Wärmepumpe (1) angeordnet sind, wobei die Vibrationsdämpfer (5) dazu eingerichtet sind, die Betriebsvibrationen der Wärmepumpe (1) zu dämpfen.

9. Anordnung nach einem der Ansprüche 7 oder 8, wobei das obere Befestigungsteil (4) das untere Befestigungsteil (2) im zusammengesetzten Zustand zumindest teilweise umschließt.

10. Anordnung nach einem der vorangehenden Ansprüche, wobei das obere Befestigungsteil (4) einen Kondensatablauf (6) aufweist.

11. Anordnung nach einem der vorangehenden Ansprüche, wobei das untere Befestigungsteil (2) und/ oder das obere Befestigungsteil (4) Befestigungselemente zur Befestigung einer Wärmepumpe (1) umfassen.

12. Anordnung nach einem der vorangehenden Ansprüche, wobei das untere Befestigungsteil (2) und/ oder das obere Befestigungsteil (4) aus Beton, Stahl oder Kunststoff hergestellt sind.

13. Anordnung nach einem der vorangehenden Ansprüche, wobei das untere Befestigungsteil (2) so beschaffen ist, dass eine erhöhte Haftreibung mit dem Untergrund (7) vorgesehen ist.
